# FASCICULE DE BREVET EUROPEEN

(11) **EP 1 243 306 B1**
(45) Date de publication et mention de la délivrance du brevet: **11.05.2005**
(21) Numéro de dépôt: 02006749.2
(22) Date de dépôt: 14.05.1996
(51) Int. Cl.: B01D 53/047, B01D 53/04, B01D 53/053

(54) **Dispositif de séparation de gaz par absorption**
Vorrichtung zur Gastrennung mittels Adsorption
Device for gas separation by adsorption

(30) Priorité: 19.05.1995 FR 9505956
(43) Date de publication de la demande: 25.09.2002
(62) Demande divisionnaire de: 96401045.8
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Brugerolle, Jean-Renaud, 75016 Paris (FR); Monereau, Christian, 75011 Paris (FR)
(74) Mandataire: Le Moenner, Gabriel

(56) Documents cités:
- EP-A- 0 038 410
- EP-A- 0 525 521
- WO-A-88/05693
- DE-A- 2 337 754
- DE-A- 3 405 260
- FR-A- 2 138 663
- US-A- 5 370 728

## Description

La présente invention concerne les dispositifs de séparation de gaz par adsorption à variation de pression, du type dit VSA ou MPSA, et plus particulièrement des dispositifs de moyenne ou faible capacité comportant au moins une machine tournante agissant sur un adsorbeur en compresseur ou en pompe.

Les dispositifs connus, tels que décrits dans le document US-A-4.534.346, de 1983, et, plus récemment, dans le document US-A-5.370.728, de 1993, comportent une machine tournante ayant un côté haute pression et un côté basse pression et actionnée en rotation en permanence dans le même sens et à la même vitesse, l'optimisation au niveau de la machine tournante se trouvant toutefois fortement contrebalancée par la mise en oeuvre de nombreuses vannes dont le nombre, d'une part, et le réglage et la maintenance de leur synchronisation, d'autre part, obèrent grandement les coûts de fabrication et d'utilisation.

Le document FR-A-238663 décrit d'autre part un dispositif de contrôle de teneur en CO₂ dans une enceinte de conservation de végétaux comportant au moins un adsorbant insérable alternativement, grâce à deux jeux de vannes sensibles à la pression, dans deux boucles de circulation, dans l'une, de l'atmosphère de l'enceinte pour en réduire la teneur en CO₂, et, dans l'autre, d'air environnant pour régénérer l'adsorbant.

La présente invention a pour objet de proposer un dispositif d'adsorption à variation de pression permettant de simplifier les circuiteries et de limiter grandement le nombre de vannes et permettant ainsi la réalisation de modules d'adsorption individuels présentant une grande souplesse d'utilisation et autorisant notamment leur association en batterie de modules en parallèle permettant de couvrir de grandes plages d'utilisation et des conditions de fonctionnement.

Pour ce faire, l'invention propose un dispositif selon la Revendication 1.

Selon d'autres caractéristiques de l'invention :
- au moins un second moyen de stockage de gaz appauvri est relié uniquement au conduit de sortie ;
- le dispositif comprend au moins deux modules individuels disposés en parallèle entre la source de mélange de gaz et la ligne utilisatrice.

Selon un aspect de l'invention, la machine tournante associée à un adsorbeur est alternativement actionnée, pendant une première phase, ou phase d'alimentation en gaz de l'adsorbeur dans un sens, puis pendant une deuxième phase, ou phase d'extraction en dépression de gaz hors de l'adsorbeur, dans l'autre sens.

Selon une caractéristique plus particulière de l'invention, l'entraînement de la machine est interrompu pendant une période déterminée à la fin de chaque phase.

Avec un dispositif selon l'invention, il n'existe aucune vanne d'isolement de part et d'autre de la machine tournante, et en particulier entre cette dernière et l'entrée de l'adsorbeur, la réversibilité de cette machine tournante permettant d'assurer alternativement et successivement une compression du mélange gazeux à séparer jusqu'à une pression haute de cycle pour l'étape d'adsorption et un pompage sous vide jusqu'à une pression haute de cycle pour une étape de désorption, l'inversion s'effectuant de façon souple et économique en exploitant au mieux les auto-rotations résultant des différentiels de pressions inversées et des forces d'inertie s'exerçant sur les équipages tournants de la machine.

D'autres caractéristiques et les avantages de la présente invention ressortiront de la description suivante de modes de réalisation donnés à titre illustratif mais nullement limitatif, faite en relation avec les dessins annexés, sur lesquels :
- la figure 1 est une vue schématique d'un mode de réalisation d'un module d'adsorption selon l'invention ;
- la figure 2 est une représentation schématique d'un cycle de pression et des mises en rotation correspondantes de la machine tournante ;
- la figure 3 est un graphe explicatif d'un cycle caractéristique de pressions et des phases d'actionnement correspondantes des vannes du module selon la figure 1 ;
- la figure 4 est une vue schématique d'un dispositif mettant en oeuvre deux modules ;
- la figure 5 est un graphe, analogue à celui de la figure 3, illustrant les cycles et ouvertures/fermetures des vannes du dispositif de la figure 4 ;
- la figure 6 est une vue schématique d'un mode de réalisation pratique d'un module qui, avec un premier moyen de stockage de gaz appauvri relié en permanence à une ligne utilisatrice du gaz appauvri, forme un module selon l'invention.

Dans la description qui va suivre et sur les dessins, les éléments identiques ou analogues portent les mêmes chiffres de référence, éventuellement indicés.

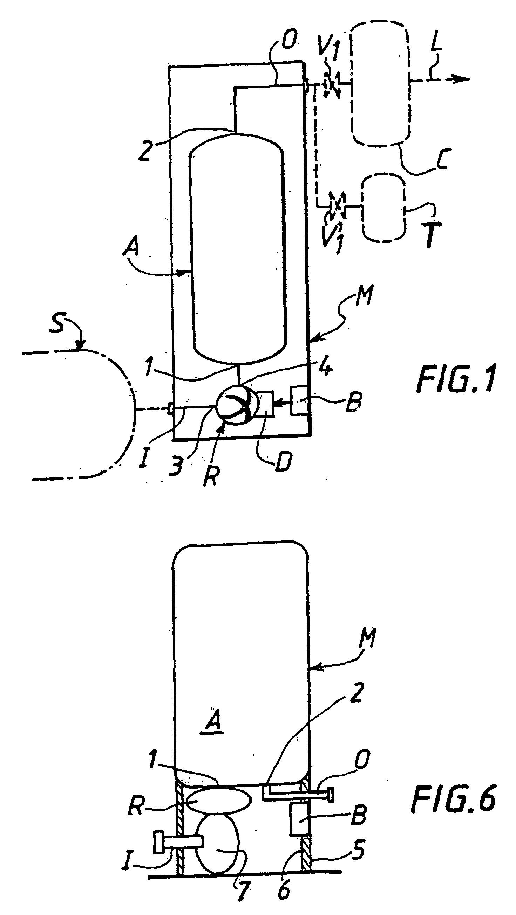

Sur la figure 1, on a représenté un module d'adsorption M selon l'invention comprenant typiquement un adsorbeur A, de configuration typiquement verticale, ayant une entrée 1 et une sortie 2 et contenant au moins un adsorbant capable de retenir au moins un constituant d'un mélange gazeux à séparer. L'entrée 1 est reliée à un conduit d'entrée l par une machine tournante réversible R, typiquement un Roots ou une machine à rotors multi-lobés, entraînée par un moteur électrique D piloté par un boîtier de commande B. La sortie 2 est reliée à un conduit de sortie O destiné à être relié, via une vanne d'isolement V₁ et une capacité C, à une ligne utilisatrice L, tandis que le conduit d'entrée I est destiné à être relié à une source S de mélange gazeux à séparer pouvant accepter un rejet de gaz résiduaire par le dispositif de l'invention. Selon une application particulière de l'invention, le mélange gazeux à séparer est l'air, la source S étant l'atmosphère ambiante, l'adsorbeur contenant au moins un adsorbant capable de retenir par adsorption les constituants non voulus du constituant à produire, qui est typiquement l'oxygène ou éventuellement l'azote.

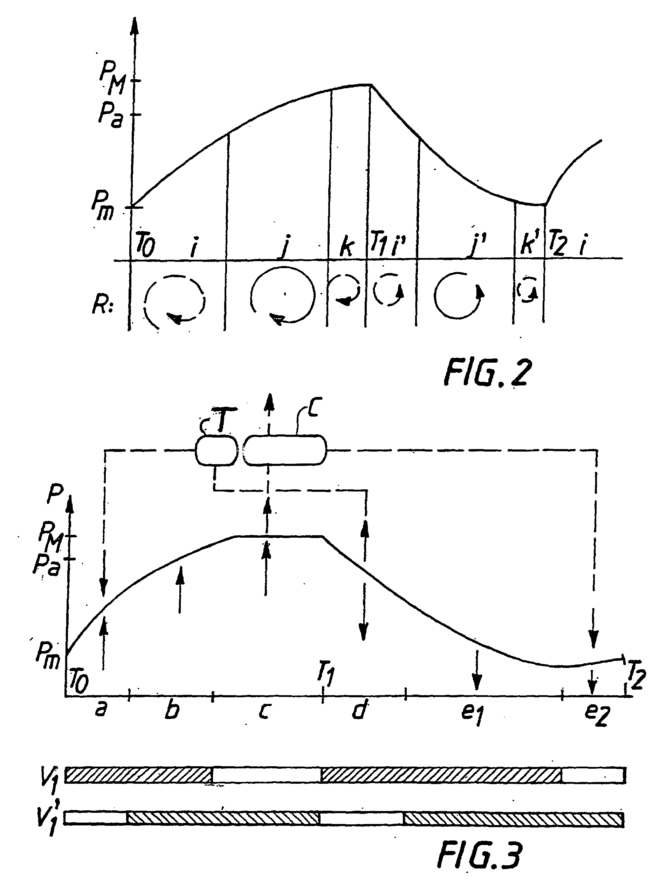

Avantageusement, comme représenté sur la figure 1, le conduit de sortie O est relié, via une vanne d'isolement V₁, à au moins un réservoir T relié fonctionnellement uniquement au conduit de sortie O pour participer à des phases d'équilibrage et repressurisation de l'adsorbeur A, comme décrit plus avant en liaison avec la figure 3, ou à l'équilibrage et élution de ce dernier, en restituant au moins une partie du gaz qui y a préalablement été emmagasiné.

On a représenté sur la figure 2 les cycles associés de pressions (en haut) et de rotation de la machine tournante (en bas). Le cycle de pressions comprend une phase de pressurisation et de production T0-T1, entre la pression basse du cycle Pₘ, inférieure à la pression atmosphérique Pa, typiquement entre 0,2 et 0,6 x 10⁵ Pa, avantageusement entre 0,3 et 0,5 x 10⁵ Pa, et la pression haute du cycle P_{M}, légèrement supérieure à la pression atmosphérique, typiquement entre 1,05 et 1,5 x 10⁵ Pa, et une phase de dépressurisation et de désorption T1-T2, entre les pressions P_{M} et Pₘ. La machine tournante n'est entraînée par le moteur que pendant les portions centrales j et J' des phases de cycle. Ainsi, le surpresseur étant entraîné par le moteur électrique en étape de compression j, une courte période de temps avant le moment d'inversion T₁ entre les deux phases, l'alimentation du moteur est interrompue, la machine tournante continuant sur sa lancée, sous l'effet de l'énergie cinétique, pendant l'étape k jusqu'à l'arrêt naturel au moment T₁ où, cette fois sous l'effet de la différence de pression entre les passages de gaz opposés 3 et 4, elle amorce une rotation naturelle dans l'autre sens, reprise et amplifiée, en fin de l'étape i', par l'entraînement actif, dans ce sens inverse, de la machine tournante, fonctionnant alors en pompe, pendant la durée de l'étape j', l'entraînement mécanique étant de même interrompu peu avant l'atteinte de la pression basse à l'instant T₂, l'équipage tournant continuant sur sa lancée pendant l'étape k', jusqu'à s'arrêter et amorcer à l'instant T₂, une rotation dans le sens inverse, sous l'effet du différentiel de pression entre les passages 3 et 4 pendant l'étape i, cette rotation étant accompagnée puis amplifiée par entraînement mécanique pendant l'étape j, comme précédemment décrit. Les études effectuées par la déposante ont révélé que, dans un tel mode de fonctionnement, la durée des phases d'auto-rotation décélérante k et k', de l'ordre de la seconde, et la durée des phases d'auto-rotation accélérante, de l'ordre de 2 à 5 secondes, étant parfaitement compatibles avec la durée globale de la plupart des cycles d'adsorption (de 20 à 150 secondes selon les capacités et les applications). On peut d'autre part adapter, si besoin est, l'inertie de la machine tournante aux cycles VSA, par exemple, au moyen de volants d'inertie, le cas échéant associés à des embrayages unidirectionnels centrifuges.

On retrouve le cycle de pressions de la figure 2 sur la figure 3 où l'on a indiqué les circulations de gaz à l'entrée et à la sortie de l'adsorbeur et vers/depuis la capacité et le réservoir. La phase de pressurisation/production T0 à T1, où du mélange à séparer est introduit par la machine tournante R dans l'entrée 1 de l'adsorbeur A, est décomposée en une étape initiale a où la vanne V'₁ est ouverte et le gaz ou mélange de gaz non préférentiellement adsorbé, ou gaz de production, par exemple de l'oxygène, est introduit simultanément à contre-courant, par la sortie de l'adsorbeur A. Cette première étape de pressurisation est suivie par une deuxième étape de pressurisation b assurée par le seul mélange gazeux à séparer, les vannes V, V'₁ étant fermées. A la fin de cette deuxième étape de préssurisation b où la pression a dépassé la pression atmosphérique, la vanne V₁ est ouverte pour une étape c de production à pression légèrement croissante ou sensiblement isobare à la pression haute du cycle PM.

Comme expliqué plus haut, au moment T1, en fin de production à pression haute du cycle, la rotation de la machine tournante R s'inverse et un mélange gazeux riche en composants adsorbés s'échappe par l'entrée 1 pendant toute la deuxième phase T1-T2. Dans une première étape d de cette deuxième phase, la vanne V'₁ est ouverte de façon à assurer une dépressurisation simultanément par le haut et par le bas de l'adsorbeur, après quoi, pendant une étape e₁, les vannes V₁ et V'₁ sont fermées et la mise sous vide de l'adsorbeur se poursuit jusqu'à la pression basse de cycle Pm jusqu'à la fin de la phase T₁-T₂. De préférence, un peu avant le temps T2, la vanne V₁ est ouverte pour réaliser une étape e₂ d'élution par du gaz de production en provenance de la capacité.

Du fait de son autonomie, un dispositif mono-adsorbeur selon la figure 1 ne pose pas de contraintes particulières concernant la durée respective des phases T0-T1 et T1-T2, non plus que des étapes constitutives de ces phases. Le moteur D peut entraîner le surpresseur à la même vitesse dans les deux sens de rotation ou à des vitesses différentes. De préférence, la machine tournante R est entraînée à vitesse maximale lors de l'étape j' de la phase de pompage T1-T2 et à une vitesse moindre, typiquement environ 50% de la vitesse maximale, en phase de compression d'air, pendant l'étape j de la phase T0-T1.

En variante, l'alimentation du moteur peut être interrompue au moment T1, ou même après une courte période de temps après le moment T1. Dans ce cas, la machine s'arrête et s'inverse naturellement pendant l'étape d. De même, en fin de dépressurisation, le moteur peut être interrompu au moment T₂, voire une courte période de temps après le moment T₂. Si l'alimentation du moteur est effectuée par l'intermédiaire d'un variateur de vitesse, ce dernier pourra être programmé pour accompagner et/ou aider l'arrêt et l'inversion du sens de rotation naturels de la machine.

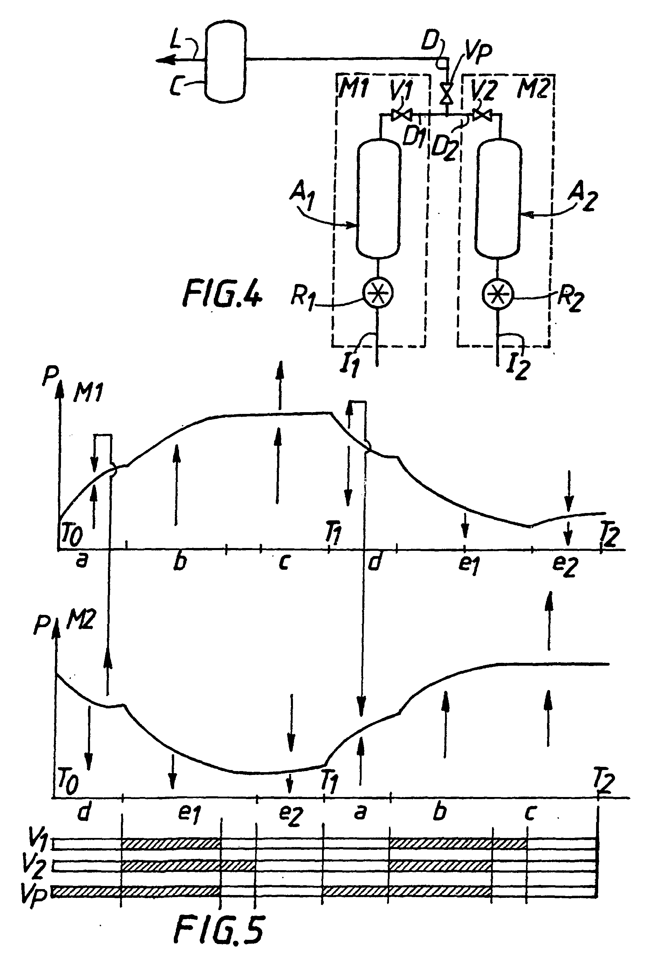

On a représenté sur la figure 4 un dispositif de séparation mettant en oeuvre deux modules M₁ et M₂ tels que décrits ci-dessus en relation avec les figures 1 à 3. Dans ce cas, les conduits O₁ et O₂ de sortie se raccordent, chacun via une vanne V₁, V₂, respectivement, à une même capacité C dans une portion amont D de la ligne de production L pourvue d'une vanne d'isolement Vp dont les étapes d'ouverture et de fermeture sont représentées, à côté de celles des vannes V₁ et V₂, sur le graphe de la figure 5 où l'on a superposé les cycle de pression des deux modules M1 et M2. Dans ce mode de réalisation à deux modules, l'admission de gaz à contre-courant lors de la première étape a de la phase de pressurisation/production est assurée par équilibrage ou pseudo-équilibrage avec l'autre adsorbeur commençant, en étape d, sa phase de dépressurisation, les cycles de pression et d'entraînement mécanique des machines tournantes R1 et R2 étant par ailleurs identiques à ceux décrits précédemment en relation avec les figures 2 et 3.

Dans les dispositifs à deux modules, la durée de l'étape a est, comme on l'a vu, égale à la durée de l'étape d et la durée des phases T0-T1 et T1-T2 est la même dans chaque module, le cycle d'un adsorbeur étant décalé d'une phase de cycle par rapport à l'autre adsorbeur. Comme précédemment, chaque machine tournante est entraînée à vitesse maximale pendant l'étape de pompage j' et à vitesse réduite, typiquement moitié de la vitesse maximale, pendant la phase de pressurisation j.

Comme on l'aura compris, un dispositif de séparation de gaz par adsorption selon l'invention peut comprendre une pluralité de modules M en parallèle, avec des synchronisations adaptées entre les différents modules.

Ainsi, pour un dispositif à trois modules, si l'on retrouve la même durée pour les étapes a et d, pour chaque module, la durée de la phase de pressurisation/production T0-T1 est ici égale à la moitié de la durée de la phase de dépréssurisation/désorption T1-T2, les modules présentant un décalage temporel dans leur cycle propre d'un tiers de la durée totale du cycle entre eux. Pour une pression haute de cycle entre 1,1 et 1,5 x 10⁵ Pa et une pression basse de cycle comprise entre 0,5 et 0,3 x 10⁵ Pa une vitesse unique du moteur d'entraînement dans l'un et l'autre sens représente le meilleur compromis énergie/investissement.

Pour des dispositifs de production d'oxygène, à partir de l'air, avec un adsorbant constitué d'au moins une zéolithe, notamment une zéolithe LiX, les pressions P_{M} et Pₘ sont typiquement celles mentionnées dans le paragraphe précédent, la durée totale d'un cycle étant comprise typiquement enter 30 et 120 secondes.

L'autonomie des modules selon l'invention permet de les assembler en batterie de n modules et de les mettre en oeuvre, selon les besoins, automatiquement ou manuellement, en tout ou partie. Par ailleurs, en cas d'incident ou de maintenance sur un module, le fonctionnement peut être aisément assuré, au moins temporairement, avec n-1 modules.

On a représenté sur la figure 6 un mode de réalisation particulier d'un module qui forme, avec un premier moyen de stockage de gaz appauvri relié en permanence à une ligne utilisatrice du gaz appauvri, un module selon l'invention. Comme on le voit, l'adsorbeur vertical A, typiquement à circulation interne de gaz horizontale, a sa sortie 2 disposée également en partie basse, l'adsorbeur A étant supporté par un bâti 5 formant jupe définissant un volume interne dans lequel sont disposés la machine tournante R et son moteur d'entraînement D, le châssis 5 comportant un revêtement d'isolation phonique 6. Sur la figure 6, on a représenté un régénérateur 7 interposable entre le conduit d'entrée I et la machine tournante R et permettant, en période froide, de récupérer une partie de l'énergie calorifique en phase de pompage pour réchauffer le mélange gazeux introduit dans l'adsorbeur en phase de compression. On peut également insérer un réfrigérant, par exemple du type atmosphérique, entre le passage 4 de la machine tournante et l'entrée 1 de l'adsorbeur.

## Revendications

1. Dispositif de séparation de gaz par adsorption de type VSA, comprenant au moins un module (M) comportant :
- une conduite unique d'entrée (I) communiquant en permanence avec une source (S) de mélange gazeux à séparer ;
- un conduit unique de sortie (O) de gaz appauvri en au moins un des constituants du mélange gazeux connecté à un premier (C) moyen de stockage de gaz appauvri relié en permanence à une ligne (L) utilisatrice du gaz appauvri;
- en série, entre la conduite d'entrée (I) et le conduit de sortie (O), une machine tournante réversible (R) et un adsorbeur (A) ; et
- des moyens (B, D) pour actionner en séquence la machine tournante (R) dans les sens de rotation opposés.

2. Dispositif selon la revendication 1, **caractérisé en ce qu'**il comprend au moins un second (T) moyen de stockage de gaz appauvri relié uniquement au conduit de sortie (O).

3. Dispositif selon la revendication 1 ou la revendication 2, **caractérisé en ce qu'**il comprend au moins deux susdits modules (Mj) disposés en parallèle entre la source (S) et la ligne utilisatrice (L).

4. Dispositif selon l'une des revendications précédentes, **caractérisé en ce qu'**il comporte un régénérateur thermique (7) commutable entre la conduite d'entrée (I) et la machine tournante (R).

5. Dispositif selon l'une des revendications précédentes, **caractérisé en ce que** l'adsorbeur (A) est supporté sur un bâti (5) abritant la machine tournante (R) et comportant des moyens (6) d'isolation phonique.

6. Dispositif selon la revendication 5, **caractérisé en ce que** l'entrée (1) et la sortie (2) de l'adsorbeur (A) sont situés à la base de celui-ci.

7. Dispositif selon l'une des revendications précédentes, **caractérisé en ce que** la machine tournante (R) est actionnée par un moteur électrique (D) à vitesse variable.

8. Dispositif selon l'une des revendications précédentes, **caractérisé en ce que** la machine tournante (R) est un Roots.

9. Dispositif selon l'une des revendications précédentes pour la séparation de gaz de l'air, où la conduite unique d'entrée communique en permanence avec l'atmosphère ambiante.

## Patentansprüche

1. Vorrichtung zur Gastrennung mittels Adsorption des Typs VSA, umfassend wenigstens ein Modul (M), umfassend:
- eine einzelne Eingangsleitung (I), die permanent mit einer Quelle (S) mit einem zu trennenden Gasgemisch verbunden ist;
- eine einzelne Ausgangsleitung (O) für Gas, dem wenigstens einer der Bestandteile des Gasgemisches entnommen worden ist, wobei diese Ausgangsleitung mit einer ersten Einrichtung (C) zur Speicherung von abgereichertem Gas verbunden ist und wobei diese erste Einrichtung permanent mit einer Leitung (L) zu dem Verbraucher des abgereicherten Gases verbunden ist;
- hintereinander geschaltet zwischen der Eingangsleitung (I) und der Ausgangsleitung (O) eine umlaufende Maschine mit umkehrbarer Drehrichtung (R) und einen Adsorber (A); und
- Einrichtungen (B, D), um die umlaufende Maschine (R) in die umgekehrten Drehrichtungen zu betätigen und zu steuern.

2. Vorrichtung nach Anspruch 1, **dadurch gekennzeichnet, dass** sie wenigstens eine zweite Einrichtung (T) zur Speicherung von abgereichertem Gas umfasst, die allein mit der Ausgangsleitung (O) verbunden ist.

3. Vorrichtung nach Anspruch 1 oder nach Anspruch 2 **dadurch gekennzeichnet, dass** sie wenigstens zwei der oben genannten Module (Mj) umfasst, die parallel zwischen der Quelle (S) und der Verbraucherleitung (L) angeordnet sind.

4. Vorrichtung nach einem der vorherigen Ansprüche, **dadurch gekennzeichnet, dass** sie einen thermischen Regenerator (7) umfasst, der zwischen der Eingangsleitung (I) und der umlaufenden Maschine (R) umschaltbar ist.

5. Vorrichtung nach einem der vorherigen Ansprüche, **dadurch gekennzeichnet, dass** der Adsorber (A) auf einem Untergestell (5) sitzt, der die umlaufende Maschine (R) abschirmt und Einrichtungen (6) zur Schalldämmung umfasst.

6. Vorrichtung nach Anspruch 5, **dadurch gekennzeichnet, dass** der Eingang (1) und der Ausgang (2) des Adsorbers (A) sich an dessen Unterseite befinden.

7. Vorrichtung nach einem der vorherigen Ansprüche, **dadurch gekennzeichnet, dass** die umlaufende Maschine (R) durch einen Elektromotor (D) mit veränderlicher Drehzahl angetrieben wird.

8. Vorrichtung nach einem der vorherigen Ansprüche, **dadurch gekennzeichnet, dass** die umlaufende Maschine (R) eine Rootspumpe ist.

9. Vorrichtung nach einem der vorherigen Ansprüche für die Trennung von Gasen aus Luft, wobei die einzige Eingangsleitung permanent mit der Umgebungsluft verbunden ist.

## Claims

1. Plant for gas separation by VSA-type adsorption, which comprises at least one module (M) having:
- a single inlet line (I) permanently communicating with a source (S) of the gas mixture to be separated;
- a single outlet line (0) for gas depleted in at least one of the constituents of the gas mixture, the said outlet line being connected to a first means (C) for storing depleted gas, which is permanently connected to a depleted-gas consumer line (L);
- in series, between the inlet line (I) and the outlet line (O), a reversible rotating machine (R) and an adsorber (A); and
- means (B, D) for actuating, in sequence, the rotating machine (R) in opposite rotation directions.

2. Plant according to Claim 1, **characterized in that** it includes at least one second means (T) for storing depleted gas, which is connected only to the outlet line (O).

3. Plant according to Claim 1 or Claim 2,
**characterized in that** it includes at least two of the abovementioned modules (Mⱼ) placed in parallel between the source (S) and the consumer line (L).

4. Plant according to one of the preceding claims, **characterized in that** it includes a thermal regenerator (7) that can be switched between the inlet line (I) and the rotating machine (R).

5. Plant according to one of the preceding claims, **characterized in that** the adsorber (A) is supported on a frame (5) that houses the rotating machine (R) and includes acoustic insulation means (6).

6. Plant according to Claim 5, **characterized in that** the inlet (1) and the outlet (2) of the adsorber (A) are located at the base of the latter.

7. Plant according to one of the preceding claims, **characterized in that** the rotating machine (R) is actuated by a variable-speed electric motor (D).

8. Plant according to one of the preceding claims, **characterized in that** the rotating machine (R) is a Roots machine.

9. Plant according to one of the preceding claims for the separation of air gases, in which the single inlet line permanently communicates with the ambient atmosphere.
